# EUROPEAN PATENT SPECIFICATION

(11) **EP 2 493 600 B1**
(45) Date of publication and mention of the grant of the patent: **06.11.2013**
(21) Application number: 10759837.7
(22) Date of filing: 14.09.2010
(51) Int. Cl.: B01F 11/00, G01N 1/38, G01N 35/02

(54) **METHOD FOR DETECTING ANALYTES IN A SAMPLE LIQUID AND A DEVICE FOR CARRYING OUT SAID METHOD**
VERFAHREN ZUM NACHWEIS VON ANALYTEN IN EINER PROBENFLÜSSIGKEIT SOWIE VORRICHTUNG ZU DESSEN DURCHFÜHRUNG
PROCÉDÉ DE CONTRÔLE D'ANALYTES DANS UN LIQUIDE D'ÉCHANTILLON ET DISPOSITIF DESTINÉ À SON EXÉCUTION

(30) Priority: 28.10.2009 EP 09174345
(43) Date of publication of application: 05.09.2012
(73) Proprietor: Roche Diagnostics GmbH, 68305 Mannheim (DE); F.Hoffmann-La Roche AG, 4070 Basel (CH); Hitachi High-Technologies Corporation, Minato-ku, Tokyo 105-8717 (JP)
(72) Inventor: DRESCHER, Bernd, 82386 Oberhausen (DE); EHLE, Claudia, 82377 Penzberg (DE); GEISSLER, Leonhard, 82327 Tutzing (DE); MUELLER, Hans-Juergen, 82347 Bernried (DE); PAUL, Hubert, 82407 Wielenbach (DE); OKUSA, Takeroni, Mito-shi, Ibaraki-ken (JP)
(74) Representative: Tiesmeyer, Johannes
(86) International application number: PCT/EP2010/063452
(87) International publication number: WO 2011/051048

(56) References cited:
- DE-U1-202006 001 514
- US-A- 4 007 011
- US-A- 5 066 135

## Description

The present invention concerns a device for detecting analytes in a sample liquid.

In the described method the sample liquid is subjected to a mixing treatment on a surface of a support having in particular immobilized reactants wherein an in particular trough-shaped vessel with an essentially flat bottom as a support surface for the immobilized reactants is used as a vessel. Such supports are also referred to as biochips.

Such a method is for example known from EP 1 604 734 A2. The method described therein utilizes a jet directed towards the sample liquid or support with a stream of gas that sweeps across the support surface in order to improve the binding between the analyte and reactant, wherein the intermixing is improved by the stream of gas that impinges on the sample liquid which results in an improved and accelerated binding between the analyte and reactant.

Although the known method produces good results in practice, the method is quite complicated and in particular the associated device is relatively complex. The stream of air evaporates the sample liquid and a corresponding jet must be allocated to each support. Furthermore, with such gas feeds from outside there is the problem of contamination which requires elaborate cleaning and filter processes in order to ensure that the sample liquid does not come into contact with contaminated gas.

Other methods described in the prior art for example from US 5,009,998 or US 6,063,564 are not suitable for supports or biochips with a planar analyte reservoir the flat bottom of which is furnished with immobilized reactants, if it is intended to carry out further process steps from above after the incubation such as e.g. washing, reagent addition, optical measurement etc. The analytes in the boundary layer between immobilized reactants and sample liquid volume are depleted by binding to the reactants. New analytes are not resupplied sufficiently rapidly from the liquid volume due to the low analyte diffusion rate of about 1 µm/s. Investigations on the known methods carried out by the applicant have shown that the poor homogeneity of the increase in intensity over the bottom surface of the support or biochip is a major disadvantage of all known methods with the exception of the method disclosed in EP 1 604 734 A2.

Document US-A-4 007 011 discloses a device in accordance with the preamble of claim 1.

The object of the invention is to provide a device in accordance with claim 1 which avoids the above-mentioned disadvantages and simplifies the detection method as well as the device.

With regard to the described method for detecting analytes this object is achieved in that the sample liquid is moved during the mixing treatment relative to the immobilized reactants by an oscillating movement of the vessel in one direction, preferably along a line or a curve.

As a result of the inertia of the sample liquid an oscillating movement of the vessel moves the sample liquid relative to the vessel and also relative to the reactants bound to the vessel so that an enhanced accumulation of analyte occurs in the boundary layer between the sample liquid containing analytes and the reactants. The oscillating movement occurs in one direction, preferably along a curved line or a circular path. Furthermore, the oscillating movement can also result in an improved homogeneous distribution of analytes relative to the reactants so that detection of analytes in the sample liquid can be improved. The overall reaction kinetics can be accelerated.

Furthermore, it was found.that the evaporation rate of sample liquid is considerably lower than is the case with the known method of EP 1604734 A2: in the case of oscillating sample vessels it was about 0.3 µl/min compared with about 0.6 - 0.7 µl/min according to the known air jet method at an ambient temperature of 18°C and a relative air humidity of 50 %.

The oscillating movement of the vessel is preferably essentially parallel to the flat bottom of the vessel and it is suggested that the vessel is oscillated at a frequency of about 1 to 50 hertz, preferably about 10 to 20 hertz and an amplitude of less than 6 millimeters, preferably of about 0.2 to 4 millimeters, most preferably of about 1 to 2 millimeters. Due to the oscillating movement essentially parallel to the flat bottom of the vessel, it is possible to prevent sample liquid from coming into contact with a cap covering the vessel on which a portion of the sample liquid could remain adhered. In addition the said frequency and amplitude of the oscillating movement do not lead to flows in the sample liquid that could result in a sort of spilling over of the sample liquid that would wet upper boundary areas and transition areas between the vessel and cap.

Furthermore, the quasi linear oscillation allows to vary the amplitude of the oscillation without mechanical change of an according device, as it is known for example from DE 20 2006 001 514 U1.

It is proposed that the vessel be oscillated in a vessel holder or that several vessels be oscillated simultaneously in a common vessel holder. In this connection each vessel can be oscillated by a drive allocated to the respective vessel or several and in particular all vessels in the vessel holder can be oscillated by a common drive. The oscillation of several vessels by driving a common vessel holder for the vessels enables a uniform and identical movement of all vessels so that there are essentially identical reaction conditions in all vessels.

In order that there is no loss or only a small loss of sample liquid from the vessel due to evaporation during the oscillating movement, it is proposed that the vessel be covered before the oscillation and in particular be sealed by a cover element.

The device for carrying out the described method comprises at least one vessel holder for receiving at least one vessel for sample liquid and, according to the invention, it is provided that the device has at least one drive which is designed such that the vessel holder and the vessel contained therein can be moved in an oscillating manner.

The device comprises a single vessel holder with several vessel receivers and a single drive which can simultaneously oscillate all vessels held in the vessel receivers. Such a drive concept for simultaneously oscillating all vessels simplifies the construction of the device. Furthermore, only one drive is required for such a device which has an advantageous effect on costs.

Alternatively it is also conceivable that each sample vessel is allocated its own drive such as a Piezo element or suchlike.

Furthermore the device comprises a vessel loading means wherein the vessel loading means and the vessel holder can be moved relative to one another in order to insert or remove a vessel into or from a particular vessel receiver.

The drive of the vessel holder is designed such that in addition to the function of producing the oscillating movement it has at least one further function of moving the vessel holder relative to the stationary vessel loading means such that each vessel receiver can be positioned in a predetermined position relative to the vessel loading means in order to insert a vessel into the respective vessel receiver or take it out of this vessel receiver. The vessel holder preferably has a circular design and has vessel receivers at regular intervals along its circumferential edge. With such a circular vessel holder, vessel receivers can be loaded with vessels or vessels can be removed from the vessel receivers by the vessel loading means. For example a vessel holder can have 12 vessel receivers. In order to load the vessel holder with vessels containing sample liquid, the vessel holder is aligned by the drive with each vessel receiver relative to the vessel loading means so that a vessel can be inserted by the vessel loading means into the respective vessel receiver. As soon as a first vessel or a first support has been received in a vessel receiver of the vessel holder, the oscillating movement of the vessel holder can begin. When further vessels are inserted into or removed from other vessel receivers, the oscillating movement can be interrupted. The vessel holder can be moved in an oscillating manner during a desired incubation period where the incubation period can be determined for a respective vessel so that after the incubation time is reached this vessel can be removed from the vessel holder and other vessels still remain in the vessel holder until their incubation time has expired. Of course the number of 12 vessel receivers is purely an example and other numbers of vessel receivers can be provided such as 8, 10, 16 etc. The number of vessel receivers depends in particular on the dimensions of the vessels and in addition also on the dimensions of the vessel holder itself. Furthermore, also a type of place-holder (dummy) into which no vessel can be inserted can be provided instead of at least one vessel receiver. Such a place-holder can for example be used to adjust the vessel holder during the incubation period for all vessels such that the place-holder is aligned relative to the vessel loading means.

Alternatively the vessel holder can also be designed as an essentially vertically orientated plate in which several rows and columns of vessel receivers are formed. For example three columns can be provided each with four vessel receivers resulting in a type of vessel receiver matrix or array. The vessel holder designed as a vertically oriented plate can for example be moved in an oscillating manner in the horizontal direction by means of a plunger coil so that the vessel receivers and the vessels held therein are correspondingly moved as well. In the case of such an arrangement of vessel receivers in a stationary vessel holder it is preferred that the vessel loading means has its own drive by means of which the vessel loading means can be moved to desired positions of the vessel receivers. In particular it is desirable that the vessel loading means can be moved in a vertical or/and horizontal direction relative to the stationary vessel holder. It is also conceivable that the vessel holder can for example only be displaced in a horizontal direction and the vessel loading means only in a vertical direction.

In order to limit the evaporation of sample liquid during the incubation period, it is proposed that the device comprises cover means which cover the vessels when they have been inserted into the vessel receivers.

The cover means can be manufactured from metal in particular aluminum or from plastic. They are preferably arranged at a small distance to the upper vessel rim which simplifies the insertion and removal of vessels into or out of the vessel receivers. The cover means can also be used as heat conductors in order to heat the samples during the incubation period.

The cover means can alternatively be in the form of sealing means which seal the vessels in an inserted state in the vessel receivers. Such sealing means can be elastic membranes or covers which lie sealingly over the upper vessel rim. This further reduces the evaporation of sample liquid. In the case of a cover it is additionally proposed that the cover has an area (cavity) which is recessed towards the top and is shaped away from the trough of the vessel. Such a design of the cover increases the distance between the inner side of the cover and the sample liquid to prevent in an even better manner sample liquid from coming into contact with the cover during the oscillating movement.

The vessel loading means preferably comprises vessel grippers where the sealing means and the vessel grippers are designed such that the sealing means are held away from the vessel by their interaction during the process of inserting the vessels or removing the vessels into or out of the vessel receivers. In this connection guide faces that interact with one another can be formed in particular on the vessel grippers or on the sealing means and in particular on the cover. Such guide faces can have the required inclines to lift the sealing means or the cover so that when the vessel gripper is inserted into the vessel receiver, the sealing means or the cover is automatically lifted in a certain manner. The sealing means can optionally be pretensioned in their closed position i.e. in the contact bearing position on the upper vessel rim for example by means of an elastic design of the sealing means or by using a spring or suchlike.

A torque motor is proposed as a drive for the vessel holder. Torque motors are characterized in that they, on the one hand, can produce a large torque and that they, on the other hand, can also execute very precise and very small movements which is especially advantageous for generating the oscillating movements. In addition to the oscillating movements it is also possible to execute feed movements with the torque motor in order to move each of the vessel receivers to the vessel loading means so that a vessel can be inserted into the respective vessel receiver or removed from the said receiver. Hence, it is not necessary to have different drives for loading or unloading the vessel holder and for its oscillating movement but rather both movements can be executed by one and the same drive i.e. the torque motor. The proposed configuration makes the device and the method to be carried out overall more robust and cheaper. Alternatively it is also possible to use a suitably designed stepper motor or a plunger coil in the case of a stationary vessel holder.

In order to control the proposed method it is proposed that the device has a control unit which is designed such that it can control or regulate the drive of the vessel holder and in particular the oscillating movement or/and feed movements to the vessel loading means.

The invention is described in an exemplary and non-limiting manner on the basis of an embodiment and with reference to the attached figures.
- Fig. 1: in part a) shows a schematic perspective view of an embodiment of the device according to the invention and in part b) it shows an enlargement of the circled area in fig. 1 a denoted I.
- Fig. 2: shows a lateral elevation of the device of fig. 1.
- Fig. 3: shows a top view from above of the device.
- Fig. 4: shows a top view of a rotor having the vessel receivers.
- Fig. 5: shows a vessel receiver in a schematic partial view and a vessel for sample liquid held therein.
- Fig. 6: shows a schematic front-view of a cover means for the vessel.
- Fig. 7: shows a schematic, perspective view of the cover means from below i.e. from the side which rests against the upper side of the sample vessel.
- Fig. 8: shows a perspective diagram in parts a) and b) of the interaction between the vessel loading means and a cover means sealing the vessel where an enlargement of the circled area of fig. 8a) denoted VIII is shown in fig. 8b).
- Fig. 9: shows a rotor in part a) as a vessel holder with an alternative cover means and an enlargement of the area of fig. 9a) bordered by the dashed line and denoted IX is shown in part b).
- Fig. 10: shows a schematic perspective diagram of an alternative embodiment of the device according to the invention.

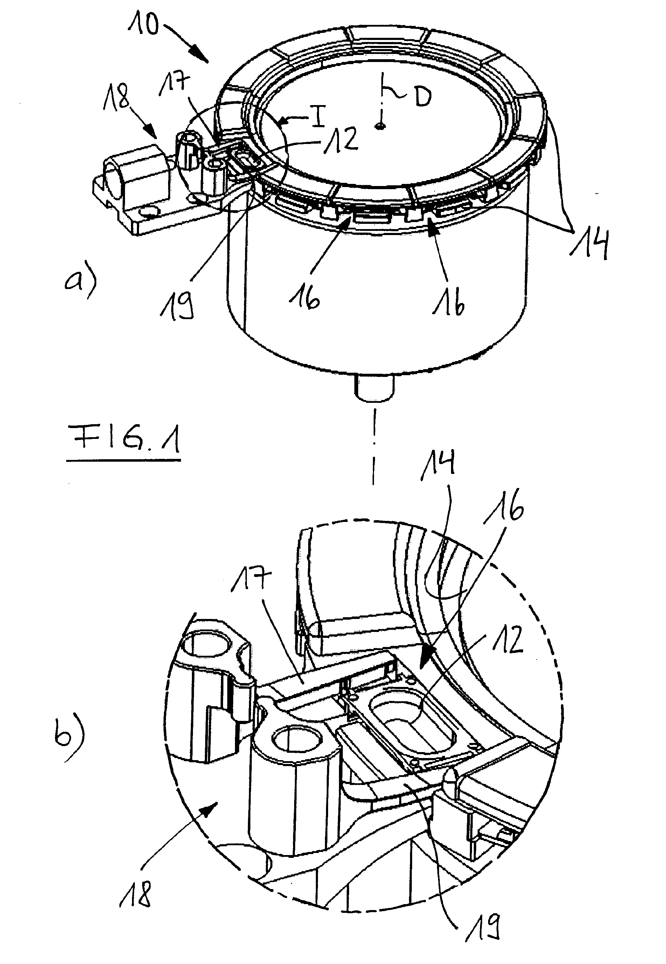

Fig. 1 shows a perspective and schematic diagram of a device 10 for holding vessels 12 for sample liquid. For this purpose the device 10 has a rotor 14 in a disk-shaped design as a vessel holder along the circumference of which a plurality of vessel receivers 16 are formed. A vessel 12 is inserted into or removed from a corresponding vessel receiver 16 by means of a gripper device 18 (vessel loading means). For this purpose the gripper device 18 has two gripper arms 17, 19 which extend in the direction of the rotor 14 (fig. 1 b) which can grip and clamp the sides of the sample vessel 12 such that it is removed from the rotor (14) in an essentially radial direction relative to the rotor 14 or it can be moved in such a manner towards the rotor. The rotor 14 can be rotated about an axis of rotation D so that all receivers 16 can be moved to the gripper device 18 in order to be loaded there with sample vessels 12.

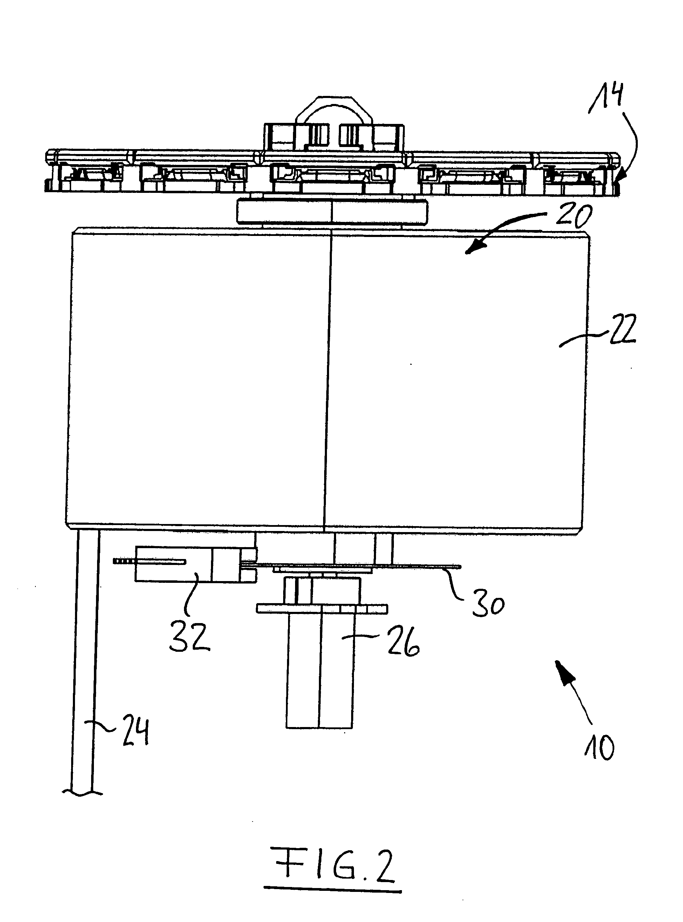

Fig. 2 shows the device 10 of fig. 1 in an elevation view from the side. The rotor 14 is connected via a spindle which is not visible to an electric motor which in this case is in the form of a so-called torque motor 20 that is accommodated in a housing 22. Further, an electric cable 24 which supplies the torque motor 20 with electrical energy is attached to the housing 22. A slip ring transmitter 26 is located on the underside of the housing 22. Furthermore, it can be seen that a coding wheel 30 is connected in a torque-proof manner to the torque motor 20 on the underside. This coding wheel 30 is scanned by a sensor 32 in order to register the rotations of the torque motor 20 and to transmit this information to a control device that is not shown here. The said control device serves to control or regulate the movements of the torque motor and thus of the rotor 14.

The torque motor 20 is a so-called direct drive which is directly connected to the rotor 14 without further mechanical gearing to increase or reduce the speed so that the rotary movements generated by the torque motor 20 can be directly transferred to the rotor 14. The torque motor 20 can be controlled in such a manner that it executes an oscillating movement in such a manner that the sample vessels held in the rotor 14 are oscillated at a frequency of about 1 - 50 hertz, preferably of about 10-20 hertz and with an amplitude of less than 6 mm, preferably of about 0.2 - 4 mm, in particular 1-2 mm. This oscillating movement is indicated in all corresponding figures by arrows OSZ which illustrate the quasi linear movement along one direction, preferably along a curved line. In this movement the vessels 12 are moved essentially parallel to their usually flat bottoms. However, the torque motor 20 can not only be used to generate the oscillating movement but it also serves to move or position the vessel receivers 16 relative to the gripper device 18 in order to insert sample vessels into the receiver 16 or to remove them from this receiver. Thus, a single drive can execute all relevant movement patterns of the rotor 14 by means of appropriate control by the control unit that is not shown.

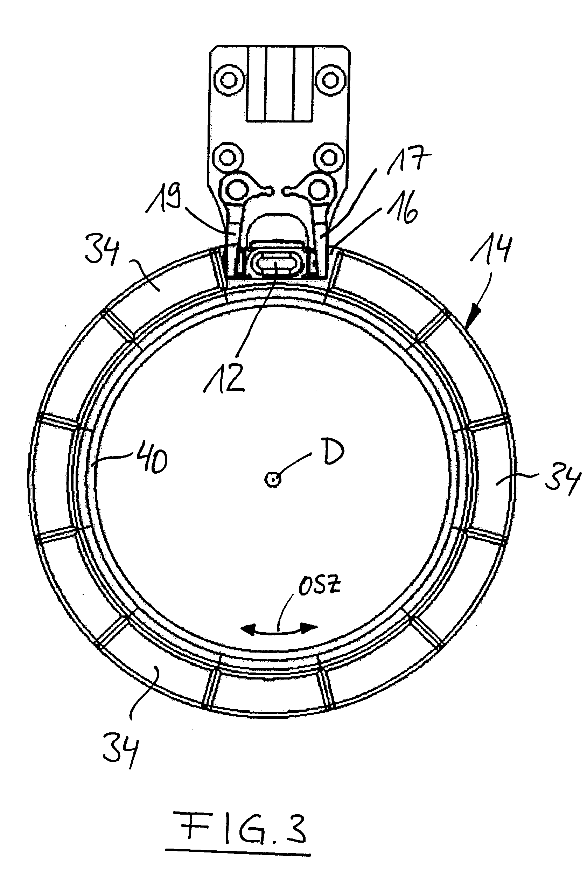

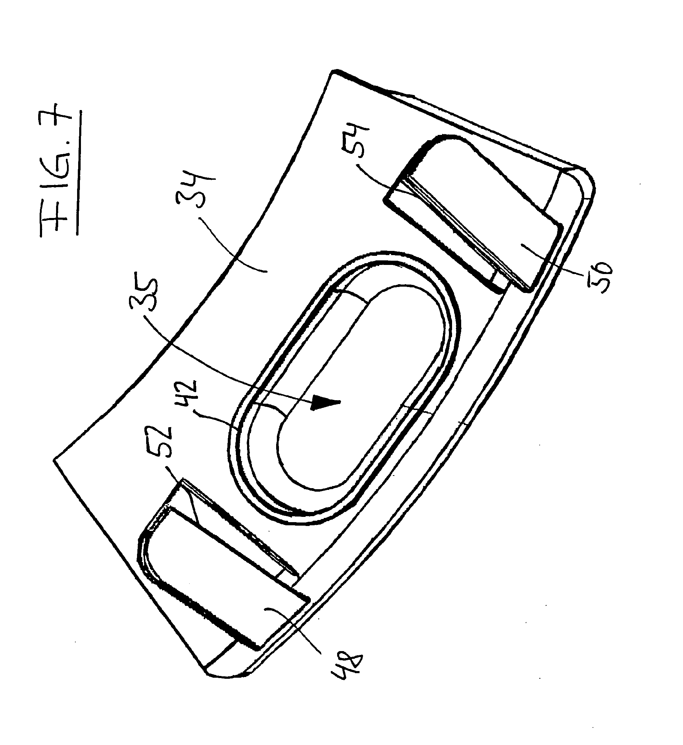

The top-view of fig. 3 shows that the rotor 14 in which the vessels 12 or the supports or biochips are held in its receivers 16, has twelve vessel receivers 16. The number of twelve vessel receivers 16 shown here is purely an example and indeed fewer or more vessel receivers can be provided depending on the size of the rotor and on the size of the sample vessels 12. The rotor 14 has cover means 34 on its upper side which each cover, especially in a sealing manner, a receiver 16 and a sample vessel 12 held therein. In this connection these cap-like cover means 34 have a hollow space (moist space cavity 35 (fig. 7)) opposite to the trough-shaped sample vessel 12 so that sufficient space is present above the upper rim of the sample vessel 12 in order to substantially prevent the cover means from being wetted with sample liquid. Furthermore, the cover 34 serves to counteract the evaporation of sample liquid.

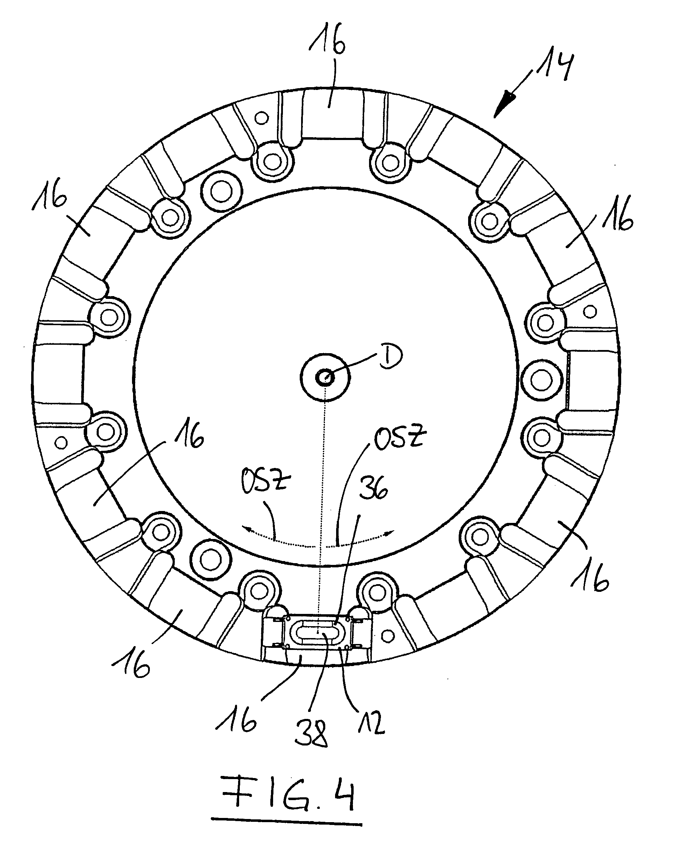

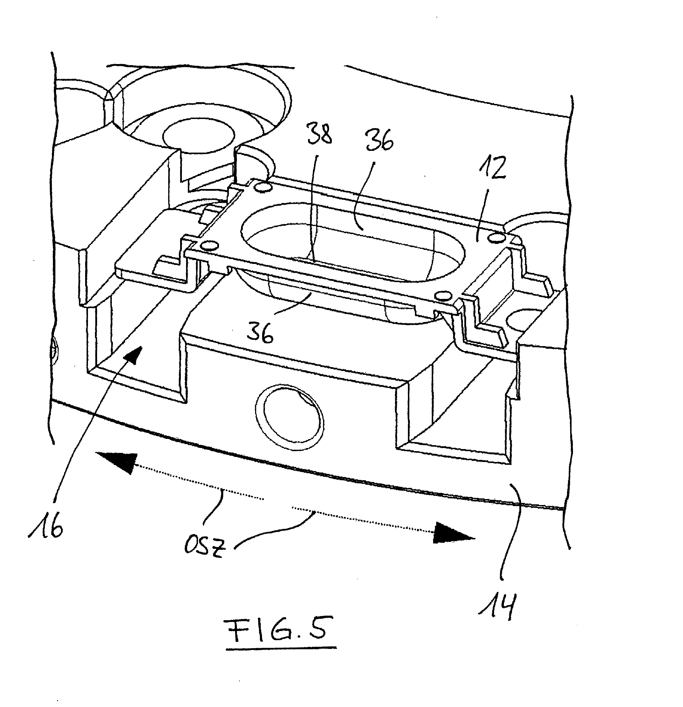

Fig. 4 shows a schematic top-view of the rotor 14 with its twelve vessel receivers 16 without cover means. A sample vessel 12 is inserted into a vessel receiver as an example. This sample vessel 12 is shown in an enlarged perspective view in fig. 5. The sample vessel 12 has a trough-like depression 36 with an essentially flat bottom 38. Immobilized reactants (not shown) which interact with the analyte present in the sample liquid are arranged on this bottom in the form of a matrix or array. This interaction is positively influenced by the said oscillating movement OSZ of the sample vessels and of the sample liquid contained therein and in particular the concentration of analyte in the boundary region to the reactants is improved by the oscillating movements so that sufficient analyte can react with the reactants and as a result the incubation period required to detect the analyte can be shortened.

The cover means 34 already referred to in relation to fig. 3 can be in the form of individual caps attached to the rotor 14 or they can be connected together by a continuous ring 40 connecting all caps (fig. 3).

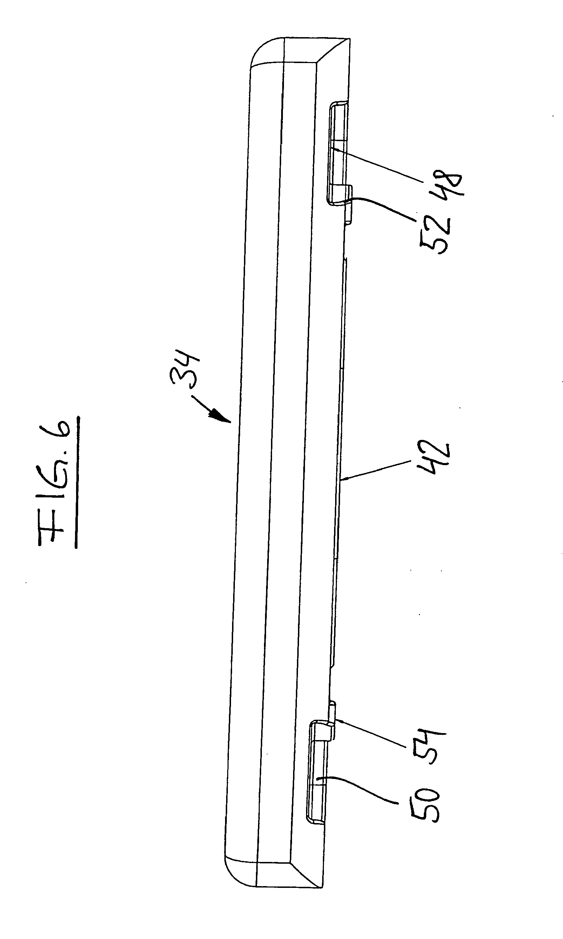

The partial figures in figs. 6 and 7 show such a sealing cap 34 in a perspective view from below (fig. 7) as well as in a sectional view from the front (fig. 6). The diagram of fig. 7 shows a moist space cavity 35 in the cap 34 which is arranged above the trough 36 of the sample vessel 12 in order to have sufficient space between the sample liquid and the cap 34 to prevent contact of sample liquid with the cap 34. Areas of free space 48, 50 are also seen in this diagram into which the grippers 17, 19 can be inserted and which are dimensioned such that the grippers 17, 19 can execute a gripping movement towards and away from the sample vessel 12. In addition the guide surfaces 52, 54 are shown which, in conjunction with the grippers 17, 19, enable the cap 34 to be lifted. A sealing lip 42 is arranged around the moist space cavity 35 which closes the support trough 36 in a liquid-tight manner when the cap 34 is closed.

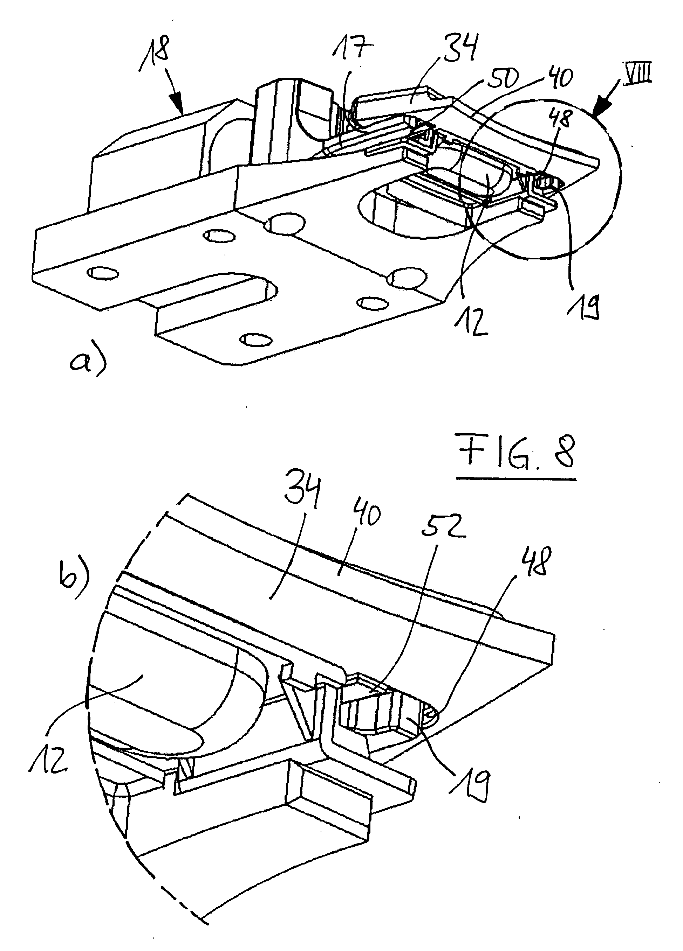

Such sealing caps 34 can, as shown in figs. 8a) and 8b), be lifted by the grippers 17, 19 (fig. 3) so that the cap 34 is pivoted relative to the sample vessel 12 in order to remove or insert the sample vessel into or out of the vessel receiver 16 by means of the grippers 17, 19. For this purpose the grippers 17, 19 or the cap 34 have corresponding guide surfaces 52, 54 on their underside which result in a lifting or lowering of the cap 34 depending on the position of the grippers 17, 19. The caps 34 are pretensioned by gravity and the elastic ring 40 in the closed position resting on the sample vessel 12.

The sealing caps 34 can be replaced individually or as an entire cap ring if they are connected together by means of the ring 40 and they can be exchanged as required. A continuous cap ring is particularly advantageous for such a replacement of the caps 34 because the time required for replacement can be kept short.

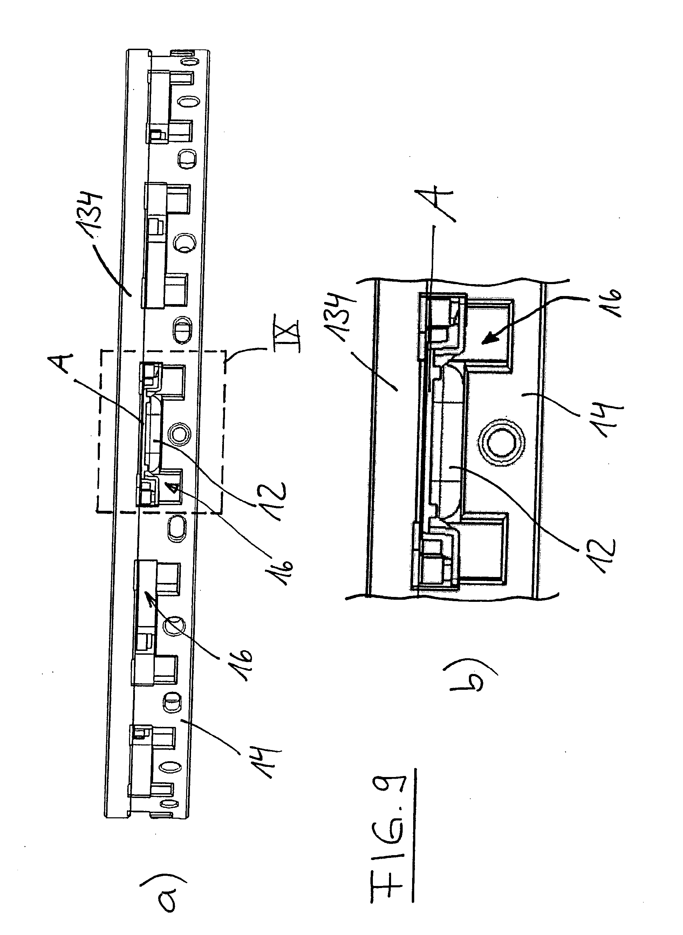

As an alternative to a sealing cover by means of the caps 34 designed as a sealing means it is also possible to arrange a metal ring 134 especially made of aluminum above the sample vessels 12 as shown in fig. 9. Such a metal cover can also be in the form of a ring or as individual cover elements per vessel receiver 16. Such covers do not make a sealing contact with the upper rim of the sample vessel 12 but rather a small and as far as possible minimal gap A is present between the underside of the cover element and the upper rim of the sample vessel 12 which enables sample vessels 12 to be inserted and removed under the stationary cover element. It has been shown that due to this simple construction of a cover 134 without sealing, the sample vessel 12 can sufficiently limit the evaporation of sample liquid. Furthermore, such a cover 134 made of metal can also be used as a heat conductor to prevent condensation of sample liquid on the cover 134 and/or to optionally enable the sample liquid to be heated to a certain temperature during the entire incubation period. If the cover 134 is made from a non-heat conducting or poorly heat-conducting material, a heating device, in particular an infrared heating or suchlike can be additionally used to heat the cover.

The metal cover 134 can also be removed and re-placed on the rotor 14 for cleaning or replacement provided it has an overall ring-shaped design.

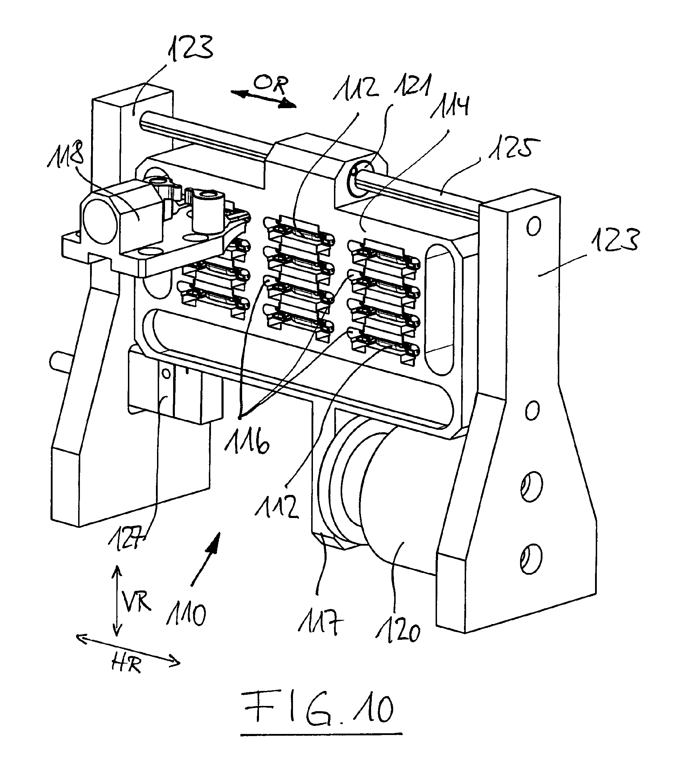

Fig. 10 shows an alternative embodiment of a device for carrying out the described method. In this device 110 vessel receivers 116 are arranged vertically above one another and horizontally next to one another in a matrix or array-like manner. The vessel holder 114 has a platelike or block design and the vessel receivers 116 are formed in it as openings. In order to be able to move the vessel holder 114 and the vessels 112 held in the vessel receivers 116 in an oscillating manner, the vessel holder 114 is connected to a plunger coil 120 on a flange 117 as a drive for the oscillating movement. Furthermore, the vessel holder 114 has a bearing 121 which can be moved along a rail 125 in the direction of oscillation. The rail 125 is attached to further frame elements 122. A vessel loading means 118 is used to load and unload the vessel receivers 116 and can be moved in a horizontal direction HR as well as in a vertical direction VR relative to the vessel holder 114 such that the vessel loading means 118 can be moved to any vessel receiver 116. Alternatively it is also conceivable that the vessel holder 114 can be moved in one direction i.e. the vertical direction or horizontal direction and the vessel loading means 118 can be moved in the other direction so that the individual vessel receivers 116 can be accessed by simultaneous relative movement of the vessel loading means 118 and the vessel holder 114. As in the first embodiment the vessels 112 are also preferably covered by a cap 134. A heating foil (not shown) can in addition be for example mounted on the rear side of the vessel holder 114. For the sake of completeness it is also mentioned that a linear sensor is indicated by 127 which detects the oscillating movement of the vessel holder 114 and can correspondingly control the plunger coil 120 by means of a control unit that is not shown.

## Claims

1. Device for detecting analytes in a sample liquid, comprising
- a vessel holder (14) with several vessel receivers (16) for vessels (12) for receiving sample liquid, and
- at least one drive (20) which is designed such that the vessel holder (14) and vessels (12) inserted in the vessel receivers (16) can be moved in a controlled oscillating manner in one direction along a line or a curve by means of that drive (20),
**characterized in that** the vessel receivers (16) are adapted to receive trough-like vessels (12) with an essentially flat bottom (38), and **in that** the device further comprises
- a vessel loading means (18), wherein the vessel loading means (18) and the vessel holder (14) can be moved relative to one another in order to insert a vessel (12) into a particular vessel receiver (16), wherein the drive (20) of the vessel holder (14) is designed such that in addition to the function of generating the oscillating movement, it has at least one further function of moving the vessel holder (14) relative to the stationary vessel loading means (18) such that each vessel receiver (16) can be positioned in a predetermined position relative to the vessel loading means (18) in order to insert a vessel (12) into the respective vessel receiver (16) or take it out of this vessel receiver (16).

2. Device according to claim 1, **characterized in that** the drive (20) is arranged to oscillate the vessels (12) at a frequency of about 1 to 50 Hz and an amplitude of less than 6 mm.

3. Device according to claim 1 or 2, **characterized in that** the drive (20) is arranged to oscillate the vessels (12) essentially parallel to the flat bottom (38) of each vessel (12).

4. Device according to any one of the preceding claims, **characterized in that** the vessel holder (14) has a circular design and has the vessel receivers (16) along its circumferential edge which are distributed at regular intervals.

5. Device according to claim 1, **characterized in that** it additionally comprises cover means (34, 134) which cover the vessels (12) when they are inserted into the vessel receivers (16).

6. Device according to claim 5, **characterized in that** the cover means (34) are configured as sealing means (34, 42) and close vessels (12) in the inserted state in a sealing manner.

7. Device according to claims 1 and 6, **characterized in that** the vessel loading means (18) comprises vessel grippers (18, 19), the sealing means (34, 42) and the vessel grippers (17, 19) being designed such that as a result of their interaction during the process of inserting the vessels (12) or removing the vessels (12) into or out of the vessel receivers (16) the sealing means (34, 42) are held away from the vessel (12).

8. Device according to any one of the preceding claims, **characterized in that** the drive for the oscillating movement is a torque motor (20) or a stepper motor or a plunger coil which is connected to the vessel holder (14).

9. Device according to any one of the preceding claims, **characterized in that** it additionally has a control unit which is designed such that it can control or regulate the drive (20) of the vessel holder (14), especially its oscillating movement.

## Patentansprüche

1. Vorrichtung zum Nachweis von Analyten in einer Probenflüssigkeit, umfassend
- eine Gefäßhalterung (14) mit mehreren Gefäßaufnahmen (16) für Gefäße (12) zur Aufnahme von Probenflüssigkeit, und
- wenigstens einen Antrieb (20), welcher derart ausgestaltet ist, dass die Gefäßhalterung (14) und in den Gefäßaufnahmen (16) enthaltene Gefäße (12) in einer gesteuerten bzw. geregelten oszillierenden Weise in einer Richtung entlang einer Linie oder einer Kurve mittels des Antriebs (20) bewegt werden können,
**dadurch gekennzeichnet, dass** die Gefäßaufnahmen (16) dazu eingerichtet sind, wannenartige Gefäße (12) mit im Wesentlichen ebenem Boden (38) aufzunehmen, und dadurch, dass die Vorrichtung ferner umfasst
- ein Gefäßlademittel (18), wobei das Gefäßlademittel (18) und die Gefäßhalterung (14) relativ zueinander beweglich sind, um ein Gefäß (12) in eine bestimmte Gefäßaufnahme (16) einsetzen zu können, wobei der Antrieb (20) der Gefäßhalterung (14) derart ausgestaltet ist, dass er neben der Funktion der Erzeugung der oszillierenden Bewegung wenigstens eine weitere Funktion des Bewegens der Gefäßhalterung (14) relativ zum feststehenden Gefäßlademittel (18) umfasst, derart, dass jede Gefäßaufnahme (16) in einer vorbestimmten Relativstellung zum Gefäßlademittel (18) positionierbar ist, um ein Gefäß (12) in die betreffende Gefäßaufnahme (16) einzusetzen oder aus dieser Gefäßaufnahme (16) herauszunehmen.

2. Vorrichtung nach Anspruch 1, **dadurch gekennzeichnet, dass** der Antrieb (20) dazu eingerichtet ist, die Gefäße (12) mit einer Frequenz von etwa 1 bis 50 Hz und einer Amplitude von weniger als 6 mm zu oszillieren.

3. Vorrichtung nach Anspruch 1 oder 2, **dadurch gekennzeichnet, dass** der Antrieb (20) dazu eingerichtet ist, die Gefäße (12) im Wesentlichen parallel zum ebenen Boden (38) jedes Gefäßes (12) zu oszillieren.

4. Vorrichtung nach einem der vorhergehenden Ansprüche, **dadurch gekennzeichnet, dass** die Gefäßhalterung (14) kreisförmig ausgebildet ist und entlang ihrem Umfangsrand in regelmäßigen Abständen die Gefäßaufnahmen (16) aufweist.

5. Vorrichtung nach Anspruch 1, **dadurch gekennzeichnet, dass** sie ferner Abdeckmittel (34, 134) umfasst, welche die Gefäße (12) im eingesetzten Zustand in den Gefäßaufnahmen (16) abdecken.

6. Vorrichtung nach Anspruch 5, **dadurch gekennzeichnet, dass** die Abdeckmittel (34) als Dichtungsmittel (34, 42) ausgebildet sind und die Gefäße (12) im eingesetzten Zustand dicht verschließen.

7. Vorrichtung nach Anspruch 1 und 6, **dadurch gekennzeichnet, dass** die Gefäßlademittel (18) Gefäßgreifer (18, 19) umfassen, wobei die Dichtungsmittel (34, 42) und die Gefäßgreifer (17, 19) derart ausgebildet sind, dass durch ihr Wechselwirken während des Vorgangs des Einsetzens der Gefäße (12) bzw. des Entnehmens der Gefäße (12) in die bzw. aus den Gefäßaufnahmen (16) die Dichtungsmittel (34, 42) vom Gefäß (12) entfernt gehalten werden.

8. Vorrichtung nach einem der vorhergehenden Ansprüche, **dadurch gekennzeichnet, dass** der Antrieb ein Torque-Motor (20) oder ein Schrittmotor oder eine Tauchspule ist, der bzw. die mit der Gefäßhalterung (14) in Verbindung steht.

9. Vorrichtung nach einem der vorhergehenden Ansprüche, **dadurch gekennzeichnet, dass** sie ferner eine Steuereinheit aufweist, die derart ausgestaltet ist, dass sie den Antrieb (20) der Gefäßhalterung (14), insbesondere deren oszillierende Bewegung, steuern bzw. regeln kann.

## Revendications

1. Dispositif pour la détection d'analytes dans un échantillon liquide, comprenant:
- un support de récipients (14) avec plusieurs récipients receveurs (16) pour des récipients (12) pour recevoir un échantillon liquide, et
- au moins un entrainement (20) qui est conçu de sorte à ce que le support de récipients (14) et les récipients (12) insérés dans les receveurs de récipientss (16) peuvent être déplacés de manière oscillante contrôlée dans une direction le long d'une ligne ou une courbe au moyen de l'entrainement (20),
**caractérisé en ce que** les receveurs de récipients (16) sont adaptés pour recevoir des récipients en forme d'auge (12) avec un fond essentiellement plat (38), et **en ce que** le dispositif comprend en plus
- des moyens de chargement de récipient (18), dans lequel les moyens de chargement de récipient (18) et le support de récipients (14) peuvent être déplacé de façon relative par rapport à un autre afin d'insérer un récipient (12) dans un receveur de récipient particulier (16),
dans lequel l'entrainement (20) du support de récipients (14) est conçu de telle façon qu'en plus de la fonction de générer le mouvement oscillatoire, il a au moins une autre fonction de bouger le support de récipients (14) relativement par rapport aux moyens de chargement de récipient stationnaire (18) de façon à ce que chaque receveur de récipients (16) peut être positionné dans une position prédéterminée par rapport aux moyens de chargement de récipient (18) afin d'insérer un récipient (12) dans le receveur de récipients respectif (16) ou de le retirer de ce receveur de récipients (16).

2. Dispositif selon la revendication 1, **caractérisé en ce que** l'entrainement (20) est arrangé pour faire osciller les récipients (12) à une fréquence d'environ 1 à 50 Hz et une amplitude de moins de 6 mm.

3. Dispositif selon la revendication 1 ou 2, **caractérisé en ce que** l'entrainement (20) est arrangé pour faire osciller les récipients (12) essentiellement de manière parallèle au fond plat (38) de chaque récipient (12).

4. Dispositif selon l'une quelconque des revendications précédentes, **caractérisé en ce que** le support de récipients (14) présente une forme circulaire et possède les receveurs de récipientss (16) le long de son bord circonférentiel qui sont répartis à intervalles réguliers.

5. Dispositif selon la revendication 1, **caractérisé en ce qu'**en plus il comprend des moyens de recouvrements (34, 134) qui couvrent les récipients (12) quand ils sont insérés dans le receveur de récipient (16).

6. Dispositif selon la revendication 5, **caractérisé en ce que** les moyens de recouvrement (34) sont configurés comme des moyens étanches (34, 42) et ferment les récipients (12) à l'état inséré de manière étanche.

7. Dispositif selon les revendications 1 et 6, **caractérisé en ce que** les moyens de chargement de récipient (18) comprennent des pinces de récipient (18, 19), les moyens d'étanchéité (34, 42) et les pinces de récipient (17, 19) étant conçus de sorte à ce que, en résultat de leur interaction pendant le processus d'insertion des récipients (12) ou de retrait des récipients (12) dedans et en dehors des receveurs de récipientss (16), les moyens d'étanchéité (34, 42) sont maintenus loin du récipient (12).

8. Dispositif selon l'une quelconque des revendications précédentes, **caractérisé en ce que** l'entrainement du mouvement oscillatoire est un moteur couple (20) ou un moteur pas à pas ou une bobine de piston qui est connecté au support de récipientss (14).

9. Dispositif selon l'une quelconque des revendications précédentes, **caractérisé en ce qu'**il possède en plus une unité de contrôle qui est conçue afin de pouvoir contrôler ou réguler l'entrainement (20) du support de récipientss (14), en particulier son mouvement oscillatoire.
